**Europäisches Patentamt**

**European Patent Office**

**Office européen des brevets**

(19)

(11) Numéro de publication: **0 019 509**
**B1**

# (12) FASCICULE DE BREVET EUROPEEN

(45) Date de publication du fascicule de brevet:
05.05.82

(51) Int. Cl.³: **B 60 T 8/14, B 60 T 8/26**

(21) Numéro de dépôt: **80400567.6**

(22) Date de dépôt: **25.04.80**

(54) **Correcteur de freinage asservi à la décélération.**

(30) Priorité: **09.05.79 FR 7911727**

(43) Date de publication de la demande:
**26.11.80 Bulletin 80/24**

(45) Mention de la délivrance du brevet:
**05.05.82 Bulletin 82/18**

(84) Etats contractants désignés:
**DE GB IT SE**

(56) Documents cités:
**DE-A-2 236 294**
**DE-A-2 736 052**
**FR-A-2 356 543**
**US-A-3 773 362**
**US-A-3 969 000**
**US-A-4 099 791**

(73) Titulaire: **SOCIETE ANONYME D.B.A., 43/47 Avenue de la
Grande Armée, F-75116 Paris (FR)**

(72) Inventeur: **Meynier, Guy, 13 allée des Sycomores,
F-93140 Bondy (FR)**
Inventeur: **Riquart, Christian, 33 rue Fessart,
F-75019 Paris (FR)**

(74) Mandataire: **Poidatz, Emmanuel et al, Service Brevets
Bendix 44 rue François 1er, F-75008 Paris (FR)**

ACTORUM AG.

Correcteur de freinage asservi à la décélération.

L'invention a essentiellement pour objet un correcteur de freinage pour véhicule automobile.

On connaît de nombreux types de correcteurs de freinage dont le fonctionnement est asservi à la décélération du véhicule. Les plus anciens appareils de ce type comportent une masse d'inertie qui se déplace, soit le long d'une rampe inclinée, soit à l'encontre de moyens de rappel élastiques tarés lorsque la décélération du véhicule dépasse une valeur prédéterminée, déclenchant la fermeture d'un clapet qui définit le point de coupure du correcteur.

Dans les correcteurs plus récents, le point de coupure n'est plus obtenu pour une décélération prédéterminée mais pour une délération variable en fonction de la pression de freinage. Il a été constaté en effet que pour des véhicules plus chargés, la définition du point de coupure à décélération constante amenait à limiter prématurément la pression de freinage appliquée aux roues arrière du véhicule, alors que ces dernières, du fait de l'accroissement de la charge, présentent la meilleure adhérence.

Il a donc été proposé, à partir des systèmes dans lesquels la masse d'inertie se déplace à l'encontre de moyens de rappel élastiques, de rendre variable la force de rappel de ces moyens en fonction de la pression de freinage (un appareil de ce type est décrit dans le brevet US-A-4 099 791). Dans de tels appareils, le point de coupure du correcteur est obtenu lorsqu'il y a équilibre de forces entre la force d'inertie que la décélération du véhicule imprime à la masse et la force des moyens de rappel.

Dans une nouvelle approche de ce problème, la présente invention propose un correcteur de freinage pour véhicule automobile, destiné à être interposé dans la ligne de pression entre le maître-cylindre et au moins l'un des cylindres de roue arrière du véhicule, dont la pression de coupure est la pression de freinage nécessaire pour provoquer la fermeture d'un clapet commandé par un senseur à inertie, ledit senseur comprenant une masse, sensible à la décélération du véhicule, qui porte l'élément de fermeture dudit clapet et des moyens de rappel élastiques sollicitant ladite masse en éloignement au siège dudit clapet, ledit correcteur comprenant des moyens pour augmenter l'amplitude de la décélération pour laquelle ledit senseur à inertie provoque la fermeture dudit clapet en fonction de la pression de freinage, ces dernier moyens comprenant au moins un élément mobile soumis sur l'une de ses faces à la pression de freinage et sur une autre face à une force de rappel élastique, ledit correcteur étant caractérisé en ce que le siège dudit clapet est porté par la face de l'élément mobile qui est soumise à la pression de freinage.

L'invention sera maintenant décrite en se référant aux dessins annexés dans lesquels:

– la figure 1 représente une coupe longitudinale d'un correcteur pour double circuit de freinage selon l'invention; et

– la figure 2 représente un graphique illustrant les relations entre pression d'entrée, pression de sortie et décélération, lors du fonctionnement du correcteur de la figure 1.

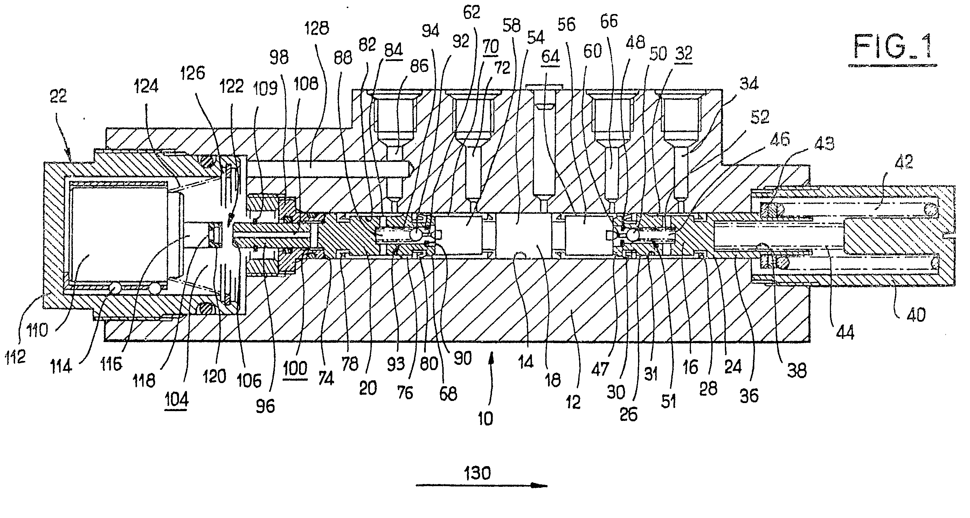

A la figure 1 est représenté un correcteur double 10 qui comprend un corps 12 dans l'alésage 14 duquel sont montés, de droite à gauche si l'on considère la figure, un piston de correcteur 16, un piston navette 18, un piston pilote 20 et un décéléromètre 22.

Le piston de correcteur 16 coulisse de manière étanche dans l'alésage 14 grâce à deux portées 24 et 26 munies de joints 28 et 30. Entre les deux portées, le piston 16 présente une partie de diamètre réduit 31, définissant avec l'alésage 14 une chambre annulaire 32 constituant une première chambre d'entrée reliée à une première source de pression (non représentée) par un passage 34. Le piston 16 comporte, à son extrémité droite, une prolongement 36 percé d'un alésage borgne 38 et s'étendant à l'intérieur d'un bouchon 40 vissé dans le corps 12. Entre le bouchon 40 et le piston 16 sont placés deux ressort 42 et 44. Le ressort 42 est de forte raideur et prend appui sur une rondelle 43 plaquée contre un épaulement extérieur du piston 16. Le ressort 44 est de faible raideur et est guidé à l'intérieur de l'alésage borgne 38. Les deux ressorts sollicitent le piston 16 vers la gauche. Le piston 16 comporte un passage 46, comprenant une partie axiale et une partie radiale, entre son extrémité gauche 47 et la chambre d'entrée 32. Dans la partie axiale du passage 46 sont disposés, de gauche à droite, un siège annulaire 48, une bille 50 et un ressort 52, ces éléments constituant une soupape à bille 51.

Le piston navette 18 comporte une partie centrale 54, au diamètre de l'alésage 14, deux prolongements 56 et 58, de diamètre réduit et munis de joints d'étanchéité, et deux poussoirs 60 et 62 de diamètre inférieur au diamètre intérieur du siège annulaire 48. La chambre annulaire 64 entcurant le prolongement 56 et délimitée par l'extrémité gauche 47 du piston 16 constitue une première chambre de sortie; elle communique avec un moteur de frein (non représenté) associé à l'une des roues arrière du véhicule, par l'intermédiaire d'un passage 66. La chambre annulaire 70 entourant le prolongement 58 et délimitée par l'extrémité droite 68 du piston pilote 20 constitue une seconde chambre de sortie; elle communique avec un second moteur de frein (non représenté) associé à l'autre roue arrière du véhicule, par l'intermédiaire d'un passage 72.

Le piston pilote 20 coulisse de manière étanche dans l'alésage 14 grâce à deux portées 74 et 76 munies de joints 78 et 80. Entre ces deux portées, le piston 20 a une partie de diamètre réduit 82, définissant avec l'alésage 14 une chambre annulaire 84 constituant une seconde chambre d'entrée qui est reliée par un passage 86 à une seconde source de pression (non représentée). Le piston 20 comporte, entre son extrémité droite 68 et la seconde chambre d'entrée 84, un passage 88, comprenant une partie axiale et une partie radiale. Dans la partie axiale du passage 88 sont disposés, de droite à gauche, un siège annulaire 90, une bille 92 et un ressort 94, ces éléments formant une soupape à bille 93. On notera que ces éléments sont identiques à ceux qui ont été décrits en se référant au piston 16.

Le piston pilote 20 comporte en outre à son extrémité gauche un prolongement 96, de diamètre réduit, coulissant de manière étanche à l'intérieur d'une bague 98 montée fixe à l'extrémité gauche de l'alésage 14. L'extrémité gauche 106 du prolongement 96 s'étend dans un volume 104 dont les limites seront précisées plus loin. Entre le prolongement 96, l'alésage 14 et la bague 98 est définie une chambre pilote 100, mise en communication avec le volume 104 grâce à un passage axial 108. Sur le prolongement 96 est fixé un circlips 109 destiné à limiter la course du piston 20 vers la droite lorsque le circlips 109 vient en butée contre la bague 98.

Le décéléromètre 22 est constitué d'une masse cylindrique 110 coulissant dans un bouchon 112, vissé à l'extrémité gauche du corps 12, par l'intermédiaire de roulements 114, disposés de préférence suivant trois génératrices espacées de 120° de la masse 110. La masse 110 comprend un prolongement 116 dirigé vers la droite et dont l'extrémité 118 est située en regard de l'extrémité gauche 106 du prolongement 96. L'extrémité 118 reçoit un élément d'étanchéité 120 prévu pour coopérer avec l'extrémité 106 du prolongement 96 pour constituer un clapet 122 commandant le passage de fluide à travers le passage axial 108. Un ressort 124 est interposé entre un épaulement annulaire 126 du bouchon 112 et la masse 110. Enfin, un passage axial 128 met en communication le passage 86 et le volume 104 délimité par le bouchon 112, la bague 98 et le prolongement 96.

Le correcteur qui vient d'être décrit est fixé sur le véhicule de sorte que son axe soit sensiblement parallèle à l'axe de déplacement du véhicule, le bouchon 40 étant situé vers l'avant du véhicule. Il fonctionne de la manière suivante:

Si l'on suppose le véhicule immobile, aucune pression de freinage n'étant appliquée, les éléments du correcteur occupent les positions dans lesquelles ils sont représentés à la figure 1: les ressorts 42 et 44 repoussent le piston 16 en butée contre le piston navette 18, celui-ci en butée contre le piston pilote 20 et ce dernier en butée contre la bague 98, la force du ressort 42 étant pratiquement nulle, et celle du ressort 44 contrebalançant celles des ressorts 52 et 94 de sorte que les poussoirs 60 et 62 du piston navette 54 repoussent les billes 50 et 92 en éloignement par rapport à leurs sièges annulaires respectifs 48 et 90. D'autre part, le ressort 124 repousse la masse 110 vers la gauche, en butée contre le bouhon 112, de sorte que le clapet 122 soit ouvert. Il existe, dans ces conditions, un communication directe entre la première chambre d'entrée 32 et la première chambre de sortie 64, via le passage 46, entre la seconde chambre d'entrée 84 et la seconde chambre de sortie 70, via le passage 88, et entre le volume 104 et la chambre pilote 100 via le passage 108.

Le véhicule étant toujours immobile, on effectue une application de freinage, les sources de pression étant, par exemple, les deux chambres d'un maître-cylindre, qui délivrent dans deux circuits séparés du fluide sous deux pressions sensiblement égales, de valeur commune $P_E$, le correcteur se comporte comme suit:

La soupape 51 étant ouverte, la pression $P_E$ est transmise, à travers le passage 46, de la première chambre d'entrée 32 à la première chambre de sortie 64. De même, la soupape 93 étant ouverte, la pression $P_E$ est transmise, à travers le passage 88, de la seconde chambre d'entrée 84 à la seconde chambre de sortie 70. Enfin, le clapet 122 étant ouvert, la pression $P_E$ est également transmise à la chambre pilote 100 par le passage 108. Les pistons 18 et 20 étant soumis à des pressions identiques sur leurs faces opposées sont équilibrés et restent immobiles. Par contre, le piston 16 est soumis à une force $P_E \times S$, résultant de l'action de la pression $P_E$ sur l'aire S de la portée 74, qui est dirigée vers la droite, et à une force F représentant la force de tarage globale des ressorts 42 et 44, qui est dirigée vers la gauche. Lorsque $P_E$ dépasse la

valeur $\dfrac{F_0}{S}$ , le piston 16 se déplace vers la droite, provoquant la fermeture de la soupape 51. Le passage de fluide entre la première chambre d'entrée 32 et la première chambre de sortie 64 étant de ce fait interrompue, la pression dans la première chambre de sortie 64 ne croît plus, ce qui provoque le déséquilibre du piston navette 18 qui se déplace vers la droite jusqu'à ce que le poussoir 60 repousse la bille 50 de son siège 48, rétablissant ainsi la communication entre la première chambre d'entrée 32 et la première chambre de sortie 64. Par contre, ce déplacement vers la droite du piston navette 18 provoque la fermeture de la soupape 93. Le passage de fluide entre la seconde chambre d'entrée 84 et la seconde chambre de sortie 70 étant de ce fait interrompu, la pression dans la seconde chambre de sortie 70 cesse de croître, ce qui provoque le déséquilibre du piston pilote 20 qui se déplace vers la droite jusqu'à ce que le poussoir 62 repousse la bille 92 de son siège 90, rétablissant ainsi la communication entre la seconde chambre d'entrée 84 et la seconde chambre de sortie 70. Le déplacement du piston pilote 20 se traduit par une augmentation de volume de la chambre pilote 100.

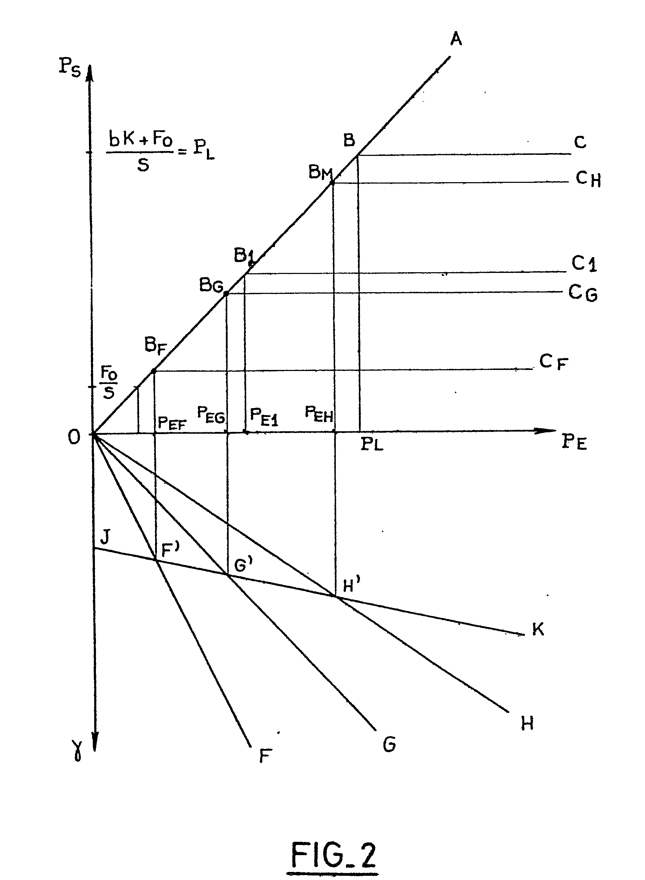

Pendant toute la phase de fonctionnement décrite ci-dessus, la pression de sortie est toujours égale à la pression d'entrée et cette relation est schématisée à la figure 2 par la droite OA.

On constate que lors de l'accroissement de la pression $P_E$, les trois pistons 16, 18 et 20 se déplacent simultanément vers la droite, d'une distance x exprimée par la formule:

$$x = \frac{P_E S - F_O}{K},$$

K étant la raideur globale des ressorts 42 et 44.

La présence du circlips 109 assure une limitation systématique de la pression de sortie $P_S$ à une valeur maximale de la manière suivante: lorsque les trois pistons se sont déplacés d'une distance b égale á la distance qui sépare au repos le circlips 109 de la bague 98, le piston 20 ne peut plus de déplacer, et tout déplacement ultérieur du piston 16 provoque la fermeture des soupapes 51 et 93 et l'interruption des communications entre chambres d'entrées et chambres de sortie. La pression de sortie ne peut donc plus croître au delà d'une valeur $P_L$ telle que:

$$b = \frac{P_L S - F_O}{K},$$

illustré à la figure 2 par la droite BC.

Si l'on suppose qu'à une pression $P_{E1}$ on provoque la fermeture du clapet 122, le volume de la chambre pilote 100 ne pouvant plus croître, le piston pilote 20 est par conséquent bloqué dans la position qu'il occupait au moment dela fermeture du clapet 122 et la pression de sortie est limitée à la valeur $P_{E1}$ par suite de l'interruption des communications entre chambres d'entrée et chambres de sortie, comme illustré à la figure 2 par la droite $B_1 C_1$.

Lorsqu'on freine le véhicule, en mouvement dans le sens de la flèche 130, à la figure 1, le décéléromètre 22 provoque la fermeture du clapet 122 et déclenche la limitation de la pression de sortie $P_S$, comme expliqué ci-après.

Lors du freinage, la décélération $\gamma$ du véhicule est sensiblement proportionnelle à la pression de freinage $P_E$ et dépend de la charge du véhicule, comme illustré schématiquement à la figure 2 par les droites OF (véhicule vide), OG (véhicule moyennement chargé) et OH (véhicule chargé). Sous l'effet de cette décélération, la masse cylindrique 110, de masse M, est soumise à une force d'inertie, dirigée vers la droite, d'amplitude $M\gamma$. Lorsque la décélération dépasse la valeur $f_o/M$, $f_o$ étant la force de tarage du ressort 124, la masse 110 se déplace vers la droite d'une distance y exprimée par la formule:

$$y = \frac{M\gamma - f_o}{k}$$

k étant la raideur du ressort 124.

On constate donc que les deux éléments 106 et 120 du clapet 122 se déplacent lors d'une application de freinage: le siège 106 d'une distance x comme déjà vu et l'élément de fermeture 120 d'une distance y comme on vient de le voir.

La distance qui les sépare évolue donc en fonction de la pression et l'on constate que, pour chaque valeur de $P_E$, il existe une décélération dite de coupure $\gamma c$ pour laquelle cette distance s'annule, c'est à dire pour laquelle le clapet 122 se ferme. Cette décélération $\gamma c$ s'exprime par la formule $y = a_o + x$, $a_o$ étant la distance qui sépare au repos les éléments du clapet 122, d'où:

$$\frac{M\gamma c - f_o}{k} = a_o + \frac{P_E S - F_O}{K}, \text{ ou encore}$$

$$\gamma c \, c = \frac{1}{M} f_o + k a_o + \frac{k}{K} (P_E S - F_O).$$

Cette relation entre $\gamma c$ et $P_E$ est illustrée à la figure 2 par la droite JK. Par conséquent, pour chaque état de charge du véhicule, il existe une pression de coupure $P_{EF}$ (ou $P_{EG}$ ou $P_{EH}$) définie par le point d'intersection F' (ou G' ou H') de la droite OF (ou OG ou OH) avec la droite JK, pour laquelle le véhicule atteint la décélération $\gamma c$ et le correcteur assure alors la limitation de la pression de freinage à cette valeur $P_{EF}$ (ou $P_{EG}$ ou $P_{EH}$) comme illustré à la figure 2 par la droite $B_F C_F$ (ou $B_G C_G$ ou $B_H C_H$).

La présente invention n'est pas limitée à un limiteur de pression double circuit mais peut avantageusement être appliquée à un limiteur simple circuit, à un compensateur simple circuit ou encore à un compensateur double circuit.

**Revendications**

1. Correcteur de freinage pour véhicule automobile, destiné à être interposé dans la ligne de pression entre le maître-cylindre et au moins l'un des cylindres de roue arrière du véhicule, dont la pression de coupure est la pression de freinage nécessaire pour provoquer la fermeture d'un clapet commandé par un senseur à inertie, ledit senseur comprenant une masse (110), sensible à la décélération du véhicule, qui porte l'élément de fermeture (118,120) dudit clapet (122), et des moyens de rappel élastiques (124) sollicitant ladite masse en éloignement du siège (106) dudit clapet, ledit correcteur comprenant des moyens pour augmenter l'amplitude de la décélération pour laquelle ledit senseur à inertie provoque la fermeture dudit clapet en fonction de la pression de freinage, ces derniers moyens comprenant au moins un élément mobile (20,18,16) soumis sur l'une de ses faces à la pression de freinage et sur son autre face à une force de rappel élastique, ledit correcteur étant caractérisé en ce que le siège dudit clapet est porté par la face de l'élément mobile qui est soumise à la pression de freinage.

2. Correcteur de freinage selon la revendication 1, caractérisé en ce que ledit élément mobile comprend un piston pilote (120) monté coulissant dans un alésage (14), ledit piston pilote comportant un prolongement (96) de diamètre réduit coulissant dans une bague (98) montée dans ledit alésage, ledit piston pilote, ledit prolongement, ledit alésage et ladite bague définissant entre eux une chambre pilote (100), ledit siège de clapet (106) étant disposé à l'extrémité dudit prolongement (96) du piston pilote (20) et ledit clapet commandant l'obturation d'un passage ménagé (108) dans ledit piston et qui communique d'une part avec ladite chambre pilote (100) et d'autre part avec ledit maître-cylindre (passage 86).

3. Correcteur de freinage slon la revendication 2, caractérisé en ce qu'il comprend une soupape (93) qui contrôle le passage le liquide de frein entre ledit maître-cylindre (passage 86) et ledit moteur de frein (passage 72), ladite soupape étant montée dans ledit piston pilote (20), un piston navette (18), coaxial audit piston pilote et sollicité en direction de ce dernier par lesdits moyens élastiques (42,44), commandant ladite soupape (93), ledit piston pilote (20) et ledit piston navette (18) étant soumis sur leurs faces adjacentes à la pression régnant en aval de ladite soupape (93).

4. Correcteur de freinage selon la revendication 3, caractérisé en ce qu'il comprend un piston de correcteur (16) coaxial audit piston navette (18) et sollicité vers ce dernier par lesdits moyens élastiques (42,43), une second soupape (51) contrôlant le passage de liquide de frein entre une seconde chambre dudit maître-cylindre (passage 34) et un second moteur de frein (passage 66), étant montée dans ledit piston de correcteur (96), ladite seconde soupape (51) étant commandée par ledit piston navette (18), ledit piston navette et ledit piston de correcteur étant soumis sur leurs faces adjacentes à la pression (passage 66) régnant en aval de ladite seconde soupape.

5. Correcteur de freinage selon l'une quelconque des revendications 2 à 4, caractérisé en ce qu'il comprend une butée (109) limitant le déplacement dudit piston pilote (20) dans le sens qui tend à éloigner le siège (106) du clapet (122) de son élément de fermeture (118,120).

**Patentansprüche**

1. Verzögerungsabhängiger Bremskraftregler für ein Kraftfahrzeug, welcher zum Einbau in die Druckleitung zwischen dem Hauptbremszylinder und mindestens einen der Hinterrad-Bremszylinder des Fahrzeuges bestimmt ist und bei welchem der Schliessdruck derjenige Bremsdruck ist, der notwendig ist, um das Schliessen eines von einem Verzögerungsfühler gesteuerten Ventiles hervorzurufen, wobei dieser Fühler eine auf die Verzögerung des Fahrzeuges ansprechende Masse (110), die das Ventilverschlussstück (118,120) des besagten Ventiles (122) trägt, und eine elastische Rückstelleinrichtung (124) aufweist, durch welche die Masse vom Ventilsitz (106) des besagten Ventiles entfernt gehalten wird, wobei der Regler Mittel zum Vergrössern der Amplitude derjenigen Verzögerung aufweist, bei welcher der Trägheitsfühler das Schliessen des besagten Ventiles in Abhängigkeit vom Bremsdruck hervorruft, und wobei zu den letztgenannten Mitteln zumindest ein bewegbares Teil (20, 18, 16) gehört, welches auf einer seiner Flächen dem Bremsdruck ausgesetzt ist und auf der anderen seiner Flächen einer elastischen Rückstellkraft (Federn 42, 44) ausgesetzt ist, dadurch gekennzeichnet, dass der Ventilsitz des besagten Ventiles von der Stirnfläche des bewegbaren Teiles getragen ist, die mit dem Bremsdruck beaufschlagt ist.

2. Bremskraftregler nach Anspruch 1, dadurch gekennzeichnet, dass das bewegbare Teil einen Steuerkolben (20) aufweist, der verschiebbar in einer Bohrung (14) angeordnet ist und eine verminderten Durchmesser aufweisende Verlängerung (96) hat, die in einem Ring (98) verschiebbar ist, der seinerseits in der Bohrung angeordnet ist, wobei der Steuerkolben, die besagte Verlängerung, die besagte Bohrung und der besagte Ring zwischen sich eine Steuerkammer (100) begrenzen, wobei der besagte Ventilsitz (106) am Ende der besagten Verlängerung (96) des Steuerkolbens (20) angeordnet ist und wobei das besagte Ventil die Sperrung eines im Steuerkolben ausgebildeten Kanales (108) besorgt, welcher einerseits mit der Steuerkammer (100) und andererseits mit dem Hauptzylinder (Kanal 86) in Verbindung steht.

3. Bremskraftregler nach Anspruch 2, dadurch gekennzeichnet, dass er ein Ventil (93) aufweist, welches den Durchgang von Bremsflüssigkeit zwischen dem Hauptzylinder (Kanal 86) und dem Bremszylinder (Kanal 72) steuert, wobei dieses Ventil in dem Steuerkolben (20) untergebracht ist, dass er ferner einen Schiffchenkolben (18) aufweist, der koaxial zum Steuerkolben angeordnet ist und durch elastische Mittel (42, 44) in Richtung auf den letzteren vorgespannt ist und das Ventil (93) im Steuerkolben (20) betätigt, und wobei der Steuerkolben (20) und der Schiffchenkolben (18) auf ihren benachbarten Stirnflächen mit dem Druck beaufschlagt sind, der stromab des Ventiles (93) im Steuerkolben (20) herrscht.

4. Bremskraftregler nach Anspruch 3, dadurch gekennzeichnet, dass ein Regelkolben (16) koaxial zum Schiffchenkolben (18) angeordnet ist, der durch die genannten elastischen Mittel (42, 44) in Richtung auf den Schiffchenkolben vorgespannt ist, dass ein zweites Ventil (51) den Durchgang für Bremsflüssigkeit zwischen einer zweiten Kammer des Hauptzylinders (Kanal 34) und einem zweiten Bremszylinder (Kanal 66) steuert, welches in dem Regelkolben (16) angeordnet ist und durch den Schiffchenkolben (18) betätigbar ist, wobei der Schiffchenkolben und der Regelkolben an ihren benachbarten Stirnflächen mit demjenigen Druck (Kanal 66) beaufschlagt sind, der stromab des zweiten Ventiles herrscht.

5. Bremskraftregler nach einem der Ansprüche 2 bis 4, dadurch gekennzeichnet, dass er einen Anschlag (109) aufweist, welcher Weg des Steuerkolbens (20) in Richtung vom Ventilsitz (106) seines Ventilverschlussstückes (118,120) weg begrenzt.

**Claims:**

1. Deceleration-responsive brake pressure regulator for automotive vehicles, intended to be interposed in the pressure line between the master cylinder and at least one of the brake cylinders of the rear wheels of the vehicle, whose cut off pressure is equal to the braking pressure necessary to cause the closing of a valve controlled by an inertia sensor, the latter including a mass (110), responsive to the deceleration of the vehicle, which carries the closing element (118, 120) of said valve (122), and a resilient return means (124) which urges said mass away from the seat (106) of said valve, said regulator including means for increasing the magnitude of the deceleration for which said inertia sensor causes the closing of said valve as a function of the braking pressure, said last-named means including a movable pilot member (20,18,16) which is subjected on one of its faces to the braking pressure and on its other face to a resilient return force (springs 42,44), said regulator being characterized in that the seat of said valve is carried by the face of the movable pilot member which is subjected to the braking pressure.

2. Deceleration-responsive brake pressure regulator according to Claim 1, characterized in that said movable pilot member comprises a pilot piston (20) slidably received in a bore (14), said pilot piston having an extension (96) of reduced diameter sliding in a ring (98) assembled in said bore, said pilot piston, said extension, said bore and said ring defining between them a pilot chamber (100), said valve seat (106) being located at the end of said extension (96) of the pilot piston (20), and said valve controlling the blocking of a passage (108) arranged in said piston and which communicates on the one hand with said pilot chamber (100) and on the other hand with said master cylinder (passage 86).

3. Deceleration-responsive brake pressure regulator according to Claim 2, characterized in that it includes a corrector valve (93) which controls the flow of braking liquid between said master cylinder (passage 86) and said brake motor (passage 72), said corrector valve being assembled in said pilot piston (20), a shuttle piston (18), coaxial to said pilot piston and urged towards the latter by said resilient return force (springs 42,44), controlling said corrector valve (93), said pilot piston (20) and said shuttle piston (18) being subjected on their adjacent faces to the pressure prevailing downstream of said corrector valve (93).

4. Deceleration-responsive brake pressure regulator according to Claim 3, characterized in that it comprises a corrector piston (16) coaxial to said shuttle piston (18) and urged towards the latter by said resilient return force (42,44), a second corrector valve (51) controlling the flow of brake liquid between a second chamber of said master cylinder (passage 34) and a second brake motor (passage 66), being assembled in said corrector piston (16), said second corrector valve (51) being controlled by the said shuttle piston (18), said shuttle piston and said corrector piston being subjected on their adjacent faces to the pressure (passage 66) which prevails downstream of said second corrector valve.

5. Deceleration-responsive brake pressure regulator according to anyone of claims 2 to 4, characterized in that it includes a stop (109) which limits the displacement of said pilot piston (20) in the direction which tends to move the valve seat (106) of the valve (122) away from its closing element (118,120).

FIG_1

2/2

FIG_2